# EUROPEAN PATENT APPLICATION

(11) **EP 2 412 507 A1**
(43) Date of publication of application: **01.02.2012**
(21) Application number: 10755766.2
(22) Date of filing: 10.02.2010
(51) Int. Cl.: B29C 45/00, B29C 45/26, B29C 45/77

(54) **RESIN MOLDED ARTICLE FOR OPTICAL ELEMENT, METHOD FOR MANUFACTURING RESIN MOLDED ARTICLE FOR OPTICAL ELEMENT, DEVICE FOR MANUFACTURING RESIN MOLDED ARTICLE FOR OPTICAL ELEMENT, AND SCANNING OPTICAL DEVICE**

(30) Priority: 27.03.2009 JP 2009079452
(71) Applicant: Konica Minolta Opto, Inc., Hachioji-shi, Tokyo 192-8505 (JP)
(72) Inventor: HARA Shinichiro, Hachioji-shi Tokyo 192-8505 (JP); MAJIMA Toshiyuki, Hachioji-shi Tokyo 192-8505 (JP); MATSUMOTO Yasuhiro, Hachioji-shi Tokyo 192-8505 (JP)
(74) Representative: Henkel, Breuer & Partner
(86) International application number: PCT/JP2010/051947
(87) International publication number: WO 2010/109965

(57) **Abstract**

Provided is: a resin molded article for an optical element wherein high surface precision is kept since an abnormal appearance-formed portion such as a hesitation mark is effectively formed outside an optical surface without cutting off the portion and an optical surface itself can be less likely to be influenced by shrinkage with hardening such as sink; a method and device for manufacturing the same; and a scanning optical device. The resin molded article for an optical element which comprises first surface portion at a part of the surface of a resin molded base and comprises a hollow portion formed by injecting a fluid into the inside of the base from the outside. Assuming that the distance between the first end of the base and an end of the first surface portion, the end being close to the first end, is A and the distance between the second end of the base, the end being other than the first end and being on the opposite side across the first surface portion, and the end of the first surface portion, the end being on the side close to the second end, is B, the relations of(A>0, B>0, A=B) are satisfied.

## Description

### TECEMCAL FILELD

This invention relates to a resin molded article for optical element, a method for manufacturing a resin molded article for optical element, a device for manufacturing a resin molded article for optical element, and a scanning optical device; particularly to a resin molded article for optical element wherein a hollow portion is formed by injecting a fluid into the resin having been charged into the cavity of a mold; a method for manufacturing resin molded article for optical element; a device for manufacturing a resin molded article for optical element; and a scanning optical device.

### BACKGROUND ART

The aforementioned optical element made of glass, metal or ceramics is widely known. In recent years, a resin-made optical element has come to be employed to ensure molding ease, greater freedom of designing, and reduced costs.

The aforementioned optical element has been employed in a great variety of fields. One of the commonly known examples of application is found in such a device as an optical information recording/reproduction device and optical scanning device wherein the light emitted from a light source is converged and an image is formed on a recording surface and others so that recording and reproduction are performed. However, these devices have been requested to provide higher image quality and higher definition, hence, a higher recording density in recent years. However, to achieve higher definition, each component used is required to provide a high degree of control precision. Since the optical element as one of the constituting element allows passage and reflection of the light emitted from the light source, and converges, deflects and deforms the light, the optical surface of the optical element is required to provide a high degree of surface precision. In recent years, attention has been drawn to the short-wave blue laser ensuring a longer service life and stable output. Since this laser ensures easy formation of a still smaller spot, the optical element must have a high degree of surface precision capable of meeting such a sophisticated function.

However, amid the requirements for a higher degree of surface precision, big technological problems unnoticed heretofore have come to the surface. The most prominent problem is related to an impact on deformation of the optical surface due to the warping and sink marks caused by shrinkage at the time of resin hardening in the process of resin injection molding. Especially in the optical element provided with fθ characteristic, the impact of the warping occurring in the scanning direction has come to the surface. Thus, the conventional injection molding fails to ensure the quality of an optical component characterized by such high precision. Further, as described above, when the optical element is to be applied to the short wave laser beam, for example, blue laser, the weatherability of the resin lens presents a further problem in ensuring high surface precision.

To solve this problem, the inventors of the present invention paid attention to the effect of hollow injection molding, and have studied the possibility of application to the optical component If the hollow injection molding technique is used to perform hollow injection molding, the tensile stress due to shrinkage at the time of harderning that causes the warping and sink mark of the molded product will be released in a hollow portion. When the tensile stress takes the form of a sink mark on the surface of the hollow portion, the warping and sink mark appearing on the surface of the molded product can be mitigated.

In one of the methods of creating a hollow portion in a resin molded article, a mold is charged with a molten resin by injection. Then the mold is filled with a compressed gas as a fluid by the injection nozzle or the gas filling nozzle provided in the mold cavity. However, the flow speed at the leading edge of the molten resin may be changed by a time lag in the step of filling with gas subsequent to resin charging, or the flow is suspended, in some cases. This will result in such a defect of unsightly appearance as a hesitation mark on the leading edge of the molten resin, and will cause serious deterioration of the surface precision.

To solve this problem, in one of the conventional techniques (e.g., Patent Literature 1), a mold is charged with resin from the injection nozzle. When the mold is fully charged, the mold is filled with a compressed gas from a different gate. In this case, the excess resin is fed to a flowing resin receiver through a resin outflow tract. A detecting device is used to detect that the resin has reached a prescribed position, before the gas reaches the resin outflow tract. Then a switching device is used to close the resin outflow tract, and the resin is solidified under pressure, whereby the molded product is produced. After that, the resin outflow tract and flowing resin receiver are cut off by the switching member in the mold. It is demonstrated that no defect of unsightly appearance such as a hesitation mark appears.

### BACKGROUND ART DOCUMENT

Japanese Unexamined Patent Application Publication No. Hei 11 (1999)-138577

### SUMMARY OF THE INVENTION

### PROBLEMS TO BE SOLVED BY THE INVENTION

However, according to this conventional method, a resin outflow tract and flowing resin receiver as unwanted portions for a resin molded article are provided. A compressed gas is filled after the resin has reached the outflow tract. The portion containing a defect of unsightly appearance such as a hesitation mark is formed on the unwanted molding portion outside the position to be cut. After that, the unwanted molding portion is cut off at the position to be cut. It has been shown, however, such an unwanted cutting operation subsequent to molding is not applicable to the scanning optical element equipped, on the periphery of the cut portion, with an optical surface required to provide a high degree of surface precision, especially to an optical element wherein high-density recording and reproduction is performed using a short-wave light. At the same time, an optical element involves a technological problem that must be solved together with the problem of hesitation marks.

In the optical element, the optical surface formed on part of the substrate requires a complete solution of the aforementioned problem caused by the shrinkage at the time of resin hardening. This requires the region formed on the hollow portion to be controlled below this optical surface to some extent. This is performed by filling the cavity with a fluid while the hollow portion is in the process of being molded. This makes it necessary to anticipate the region filled with the charged resin by the fluid. However, in the case of an optical component, differently from other molded products, the surface precision is affected also by the resin charged position and fluid inflow position, and this imposes restrictions. Thus, the resin charged position and fluid inflow position are preferably designed in such a way that the resin is emitted from one end of the cavity outside the region where the optical surface is formed.

This requires the profile of the optical component to be designed to ensure that, even when the resin charging and fluid filling operations are performed from such a restricted position, a hollow region is formed below the optical surface to some extent, and a defect of unsightly appearance such as a hesitation mark will not adversely affect the optical surface.

In view of the problems described above, it is an object of the present invention to provide a resin molded article for an optical element capable of providing an effective solution to problems involved in the surface precision deteriorated by sink marks resulting from shrinkage at the time of resin hardening, and a defect of unsightly appearance such as a hesitation mark, a method and device for manufacturing this resin molded article, and a scanning optical device.

### MEANS FOR SOLVING THE PROBLEMS

To solve the aforementioned problems, a first embodiment of the present invention is a resin molded article for an optical element including: a first surface portion provided on part of the surface of the substrate formed of resin; and a hollow portion formed by filling the substrate interior with a fluid from outside; wherein, assuming that the distance between the first end of the substrate and the end of the first surface portion close to this first end is "A", and the distance between the second end on the opposite side through the first surface portion, the second end being the end different from the first end of the substrate, and the end of the first surface portion close to the second end is "B", the following relationship is satisfied:
A>0
B>0
A=B

A second embodiment of the present invention is the resin molded article for optical element described in the aforementioned first embodiment, wherein the surface roughness Ra of the entire first surface portion satisfies Ra = 5 (nm).

A third embodiment of the present invention is the resin molded article for optical element described in the aforementioned first embodiment, wherein a mirror portion is formed on the first surface portion.

A fourth embodiment of the present invention is a scanning optical device including: a light source; a deflection means for deflecting the outgoing light emitted from this light source; a converging means wherein the light emitted from this light source enters and converges onto the deflection means; and an image forming optical system wherein the image of the light deflected by the deflection means is formed on the scanned surface; wherein at least one of the optical elements constituting the image forming optical system has one surface portion on part of the surface of a long substrate formed of resin, and a hollow portion formed by injecting a fluid into the substrate from the outside; wherein assuming that the distance between the first end of the substrate and the end of the first surface portion close to this first end is "A", and the distance between the second end on the opposite side through the first surface portion, the second end being the end different from the first end of the substrate, and the end of the first surface portion close to the second end is "B", the following relationship is satisfied:
A>0
B>0
A=B

A fifth embodiment of the present invention is the scanning optical device described in the aforementioned fourth embodiment, wherein the surface roughness Ra of the entire first surface portion satisfies Ra = 5 (nm).

A sixth embodiment of the present invention is the scanning optical device described in the aforementioned fourth or fifth embodiment, wherein the first surface portion is provided with a mirror surface section for reflecting the outgoing light.

A seventh embodiment of the present invention is the scanning optical device described in the aforementioned sixth embodiment, wherein the surface roughness Ra of the entire first surface portion satisfies Ra = 5 (nm).

An eighth embodiment of the present invention is a method for manufacturing a resin molded article for an optical element wherein, in a resin molded article for an optical element having a first surface portion on part of the surface of the substrate formed of resin, and a hollow portion formed by injecting a fluid into the substrate from the outside, assuming that the distance between the first end of the substrate and the end of the first surface portion close to this first end is "A", and the distance between the second end on the opposite side through the first surface portion, the second end being the end different from the first end of the substrate, and the end of the first surface portion close to the second end is "B", the following relationship is satisfied:
A>0
B>0
A=B
wherein the aforementioned method for manufacturing a resin molded article for an optical element includes: a step of preparing a first mold having a transfer surface for transferring the first surface portion; and a second mold provided opposed to the first mold to form a cavity by clamping the mold jointly with the first mold; a step of an injection step for injecting a molten resin from one of the cavity ends into the cavity; a detection step for detecting that the leading edge of the resin charged in the injection step is located at a prescribed position; and a fluid injection step for controlling the charging with resin based on the detection step and to inject a fluid into the cavity to form a hollow portion inside the cavity

A ninth embodiment of the present invention is the method for manufacturing a resin molded article for an optical element described in the aforementioned eighth embodiment wherein the surface roughness Ra of the entire first surface portion satisfies Ra = 5 (nm).

A tenth embodiment of the present invention is the method for manufacturing a resin molded article for an optical element described in the aforementioned eighth or ninth embodiment, further including a mirror surface section forming step for forming a mirror surface section on the first surface portion of the resin molded article obtained subsequent to the fluid injection step.

A eleventh embodiment of the present invention is the method for manufacturing a resin molded article for an optical element described in any one of the aforementioned eighth, ninth and tenth embodiments, wherein, in the fluid injection step, injection of fluid starts after the lapse of a prescribed time from suspension of charging with resin.

A twelfth embodiment of the present invention is a device for manufacturing a resin molded article for an optical element wherein, in a resin molded article for the optical element having a first surface portion on part of the surface of a substrate formed of resin, and a hollow portion formed by injecting a fluid into the substrate from the outside, assuming that the distance between the first end of the substrate and the end of the first surface portion close to this first end is "A", and the distance between the second end on the opposite side through the first surface portion, the second end being the end different from the first end of the substrate, and the end of the first surface portion close to the second end is "B", the following relationship is satisfied:
A>0
B>0
A=B
the aforementioned device for manufacturing a resin molded article further including: a first mold having a transfer surface for transferring the first surface portion; a second mold provided opposed to the first mold to form a cavity by clamping the mold jointly with the first mold; a charging means for injecting a molten resin from one of the cavity ends into the cavity; a detection means for detecting that the resin charged into the cavity by the charging means is located at a prescribed position; and a fluid injection means for controlling charging with resin by the detection means and injection of a fluid into the cavity by the fluid injection means.

### ADVANTAGES OF THE INVENTION

The present invention provides a resin molded article for an optical element, a method for manufacturing such a resin molded article for the optical element, and a device for manufacturing such a resin molded article for the optical element, wherein the aforementioned resin molded article for the optical element is characterized by a high degree of surface precision because the molded portion with abnormal appearance such as a hesitation mark in the present invention can be effectively formed outside an optical surface without having to cut off and removing such a molded portion, and an optical surface itself can be made immune to shrinkage by hardening such as sink.

### BRIEF DESCRIPTION OF THE DRAWINGS

Fig. 1 is an explanatory diagram showing a laser beam scanning optical device incorporating an optical element in a first embodiment of the present invention;
Fig. 2 is a cross sectional view showing that the resin molded article for the optical element is cut in the direction of length;
Fig. 3 is a plan view showing the resin molded article for the optical element;
Fig. 4a is a cross sectional view of the mold when cut by a perpendicular line including a bisector in the direction of thickness, and Fig. 4b is a cross sectional view of the mold when cut by a perpendicular line including a bisector in the direction of length;
Fig. 5 is a functional block diagram showing an injection molding machine equipped with a detecting means;
Fig. 6 is a time chart showing the relationship between the detection temperature and injection of compressed gas;
Fig. 7 is a flow chart showing a step of manufacturing the resin molded article for the optical element;
Fig. 8 is a functional block diagram showing the injection molding machine as a variation of the present invention;
Fig. 9 is a time chart showing the relationship between the detection temperature and injection of compressed gas;
Fig. 10 is a flow chart showing the step of manufacturing a resin molded article for the optical element as an variation of the present invention;
Fig. 11 is a functional block diagram showing the injection molding machine as another variation of the present invention;
Fig. 12 is a flow chart showing a step of manufacturing the resin molded article for the optical element as still another variation of the present invention;
Fig. 13 is a plan view showing the resin molded article for the optical element in a second embodiment of the present invention; and
Fig. 14 is a cross sectional view showing the resin molded article for the optical element.

### DETAILED DESCRIPTION OF THE PREFERRED EMBODIMENTS

### [Embodiment 1]

### (Structure)

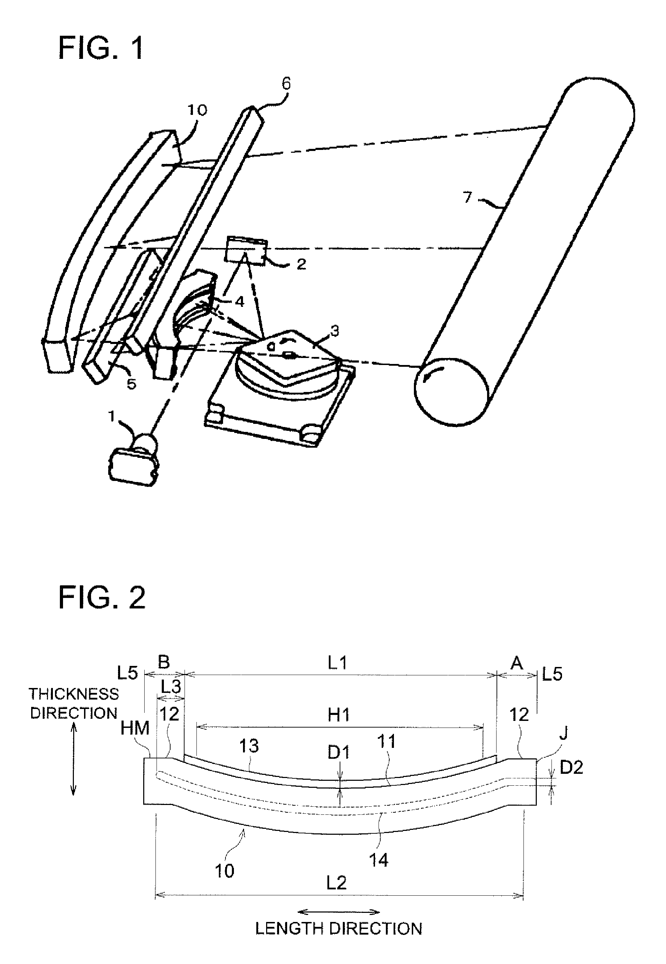

Referring to Fig. 1, the following describes the resin molded article for the optical element in a first embodiment of the present invention. Fig. 1 is a diagram showing an example of a laser beam scanning optical device incorporating a resin molded article for the optical element.

In Fig. 1, the laser beam scanning optical device includes a light source unit 1, cylindrical mirror 2, polygon mirror 3 as a deflection means, toric lens 4, plane mirrors 5 and 6, and fθ mirror 10 with fθ characteristic.

After having been converged into an approximately parallel beam by a collimating lens (not illustrated), the laser beam emitted from the light source unit 1 is reflected by the cylindrical mirror 2 and is converted into the form of an approximately straight line wherein the beam in the direction of length is parallel to the main scanning direction. Then the laser beam reaches the polygon mirror 3.

The polygon mirror 3 has four planes of polarization on the outer peripheral portion and is driven at a constant speed in the counterclockwise direction. The laser beam is deflected at a constant angular velocity in the main scanning direction by the rotation of the polygon mirror 3 and is led to the toric lens 4. In this case, the toric lens 4 has different powers in the main scanning direction and in the sub-scanning direction, and the laser beam is converged on the scanned surface in the sub-scanning direction, whereby the deflected surface of the polygon mirror 3 and the scanned surface are kept in the relationship of conjugation. Thus, the planar inclination error of each deflecting surface of the polygon mirror 3 is corrected by combination with the cylindrical mirror 2.

The above description uses an example of a polygon mirror as a deflection means, without the present invention being restricted thereto. It goes without saying that a galvano mirror and other commonly known deflection means can be used so long as the incoming light is deflected in a different direction.

The laser beam having passed through the toric lens 4 is reflected by the plane mirrors 5 and 6 and is further reflected by the fθ mirror 10. After that, the laser beam is converged onto the photoreceptor drum 7. The speed of the laser beam having been deflected at a constant angular velocity by the polygon mirror 3 is converted by the fθ mirror 10 to a constant linear velocity on the scanned surface (photoreceptor drum 7). The photoreceptor drum 7 is driven in the counterclockwise direction at a constant speed. An image is formed on the photoreceptor drum 7 by the main scanning operation of the laser beam by the polygon mirror 3, rotation (sub-scanning) of the photoreceptor drum 7, and modified laser beam output.

As described above, the laser beam scanning optical device is made up of various types of optical elements. Especially, such substrates as the plane mirrors 5 and 6 and fθ mirror 10 are formed in a long tabular shape. A mirror surface is provided to reflect the laser beam received within a prescribed range in the direction of length, and an image is formed on the photoreceptor drum 7. Thus, the structure is designed in such a way that the image quality is directly affected by the precision on the surface of the optical element provided with the mirror surface.

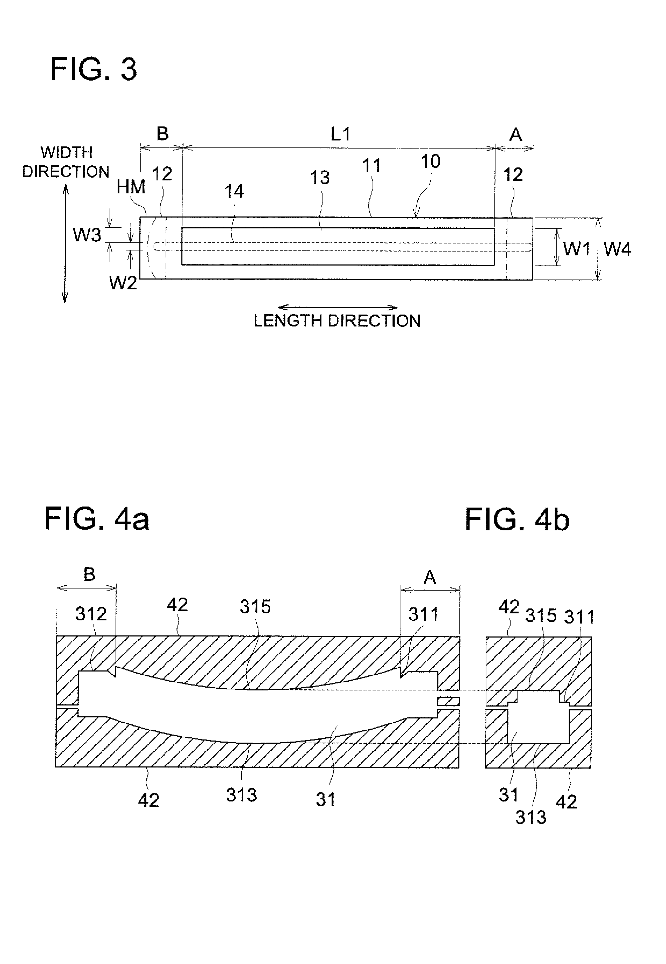

Referring to Figs. 1 through 3, the following describes the details of the structure of the resin molded article for the optical element. Fig. 2 is a cross sectional view showing that the resin molded article for the optical element is cut in the direction of length. Fig. 3 is a plan view showing the resin molded article for the optical element.

The optical element is required to provide a high degree of mirror surface precision and dimensional precision, reduced weight, enhanced safety and durability, and economic viability. Such an optical element provides excellent production materials over wide-ranging fields including the materials for manufacturing electric and electronic components, automotive parts, medical goods, safety equipment, building materials and household appliances.

As described above, the optical element of the present invention is exemplified by the plane mirrors 5 and 6 and fθ mirror 10 built in the laser printer. The substrates of the plane mirrors 5 and 6 and fθ mirror 10 built in the laser beam have hollow portions, and a hesitation mark is provided outside the surface characterized by a high degree of surface precision. The following describes the fθ mirror 10 as a typical example, and description of the plane mirrors 5 and 6 and other optical elements will be omitted.

The fθ mirror 10 includes: a first surface portion 11 formed in a long tabular shape and having a prescribed range H1 in the direction of length, provided with a mirror surface section 13 for reflecting the optical beam received within the prescribed range H1; and a pair of second surface portions 12 arranged to sandwich the first surface portion 11 from the direction of length. The direction of length is defined as the lateral direction facing the sheet of Fig. 2, and the direction of thickness is defined as the vertical direction. The direction of width is defined as the longitudinal direction in Fig. 3.

In the breadth of the direction of length, a prescribed range H1 is kept within the region of the mirror surface section 13, and the region of the mirror surface section 13 is kept within the region of the first surface portion 11. Figs. 2 and 3 show the region of the mirror surface section 13 and that of the first surface portion 11 confirming to each other in the breadth of the direction of length.

In the fθ mirror 10, a long tabular substrate, a mirror surface section 13 located on one of the surfaces of the substrate and a third electrode 14 located inside the substrate on the back of the mirror surface of the mirror surface section 13 are provided. Further, both ends of the hollow portion 14 are formed outside both ends of the mirror surface section 13 in the direction of length. This structure ensures that the tensile stress caused by shrinkage resulting from resin hardening is released into the hollow portion 14 having been formed. The warping in the direction of length caused by shrinkage resulting from resin hardening is mitigated over the entire mirror surface section 13, with the result that the surface precision is enhanced.

In the conventional technique, the mold is gripped by the molded article due to shrinkage resulting from resin hardening, and distortion of the mirror surface section 13 occurs due to resistance to mold release. In the present invention, however, the mirror surface section 13 is protruded from the substrate in the direction of thickness. This structure minimizes the distortion of the mirror surface section 13 due to resistance to mold release. Further, when the optical element (resin molded article) is manufactured, the mirror surface section 13 is corrected, for example, the thickness of the mirror surface section 13 is reduced by cutting partially or wholly. This correction may change the profile of the mirror surface section 13. Even when the surface of the mirror surface section 13 is embedded into the substrate as a result of correction, the surface of the mirror surface section 13 can be kept protruded over the surface of the substrate after correction, by adjusting the length of the mirror surface section 13 protruded from the substrate in advance in anticipation of the correction of the mirror surface section 13.

In the resin molded article of the present embodiment, assume that the length of the mirror surface section 13 in the direction of length is L1, the length in the direction of width is W1, the length of the hollow portion 14 in the direction of length is L2, the length in the direction of width is W2, the length in the direction of thickness is D2, the length of the substrate in the direction of width is W4, and the distance from the end of the mirror surface section 13 to the end of the substrate with respect to one side in the direction of length is L5. It is preferred to design the structure wherein the distance L3 from the end of the mirror surface section 13 to the end of the hollow portion 14 is 0 = L3 < L5 with respect to one side in the direction of length. The distance W3 from the end of the mirror surface section 13 to the end of the hollow portion 14 is 0 = W3 < W2 / 2 with respect to one side in the direction of width.

Further, assume that A denotes the distance from the end of the first surface portion 11 to the end of the optical element on the same side, and B indicates the distance between the end on the first surface portion 11 formed on the opposite side through the hollow portion 14, thus the end being different from the end of the first surface portion 11, and the end of the optical element located on the same side. Under this condition, the optical element is required to have such a profile that meets the following relationship: A > 0 and B > 0.

At the same time, when the resin and fluid are injected from the resin charging end J on the side A, in this case, A = B (A = B when resin and fluid are injected from side B) must be satisfied in order to ensure that the molded portion of unsightly appearance such as a hesitation mark is located outside the first surface portion 11, and the hollow portion 14 is formed below the region corresponding to the first surface portion 11.

In the case of a smaller optical element, A and B are within the following range: 3.5 = A = 5.0 and 3.5 = B = 5.0. The aforementioned condition is more preferably satisfied.

When D 1 is the length of the mirror surface section 13 protruding from the surface of the substrate in the direction of thickness, D1 is within the range of 0.1 (mm) < D1 = 3 (mm). When consideration is given to mold release, the lateral area of the mirror surface section 13 will be increased, and the resistance to mold release will also be increased. This will reduce the mirror surface precision on the periphery. To prevent this, it is preferred to meet 0.1 (mm) < D1 = 0.3 (mm).

The preferred relationship between the length W1 of the mirror surface section 13 in the direction of width and the length W2 of the hollow portion 14 is 0.01 = W2 / W1 =1.

In Figs. 1 and 2, the hollow portion 14 is arranged at the center both in the directions of width and thickness and is illustrated in a straight line in parallel with the mirror surface section 13. This is only for the sake of schematic illustration, without imposing any restriction on the profile or positional relationship of the hollow portion 14.

A hesitation mark HM is formed on the second surface portions 12. The hesitation mark HM can be formed at any position within the width of the second surface portions 12 in the direction of length. However, the hesitation mark HM is preferably provided as far away from the first surface portion 11 as possible.

In the first embodiment, the fθ mirror 10 has been introduced as a resin molded article for the optical element molded in a long tabular form. However, it need not be a long one as long as it is a resin molded article for the optical element molded in a tabular form. A circular, elliptical or approximately square molded article can be used. In this case, the hollow portion 14 is provided along the first surface portion 11. It is only required that the hollow portion 14 should be molded wider than the first surface portion in this direction.

### (Injection molding machine)

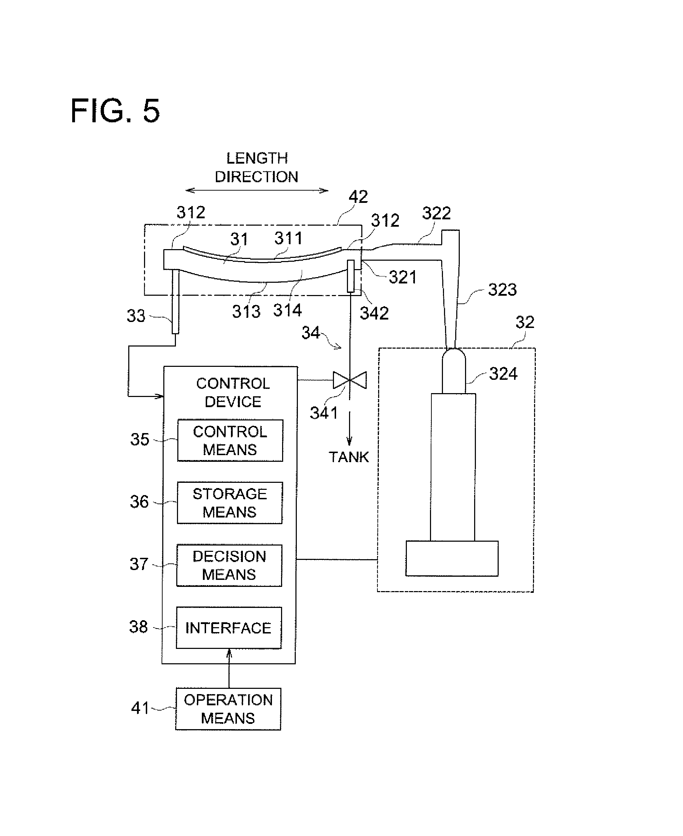

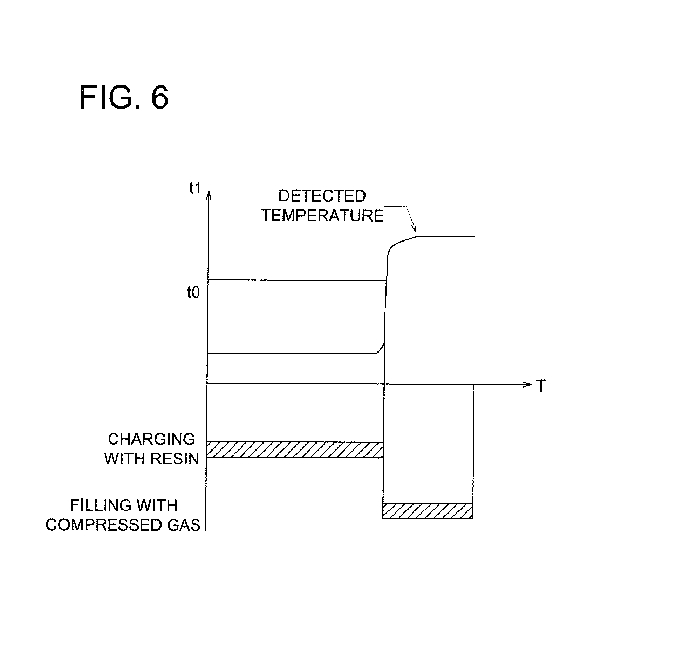

The following describes the injection molding machine for manufacturing the substrate of the fθ mirror 10 with reference to Figs. 1 through 6. Fig. 4a is a cross sectional view of the mold when cut by a perpendicular line including a bisector in the direction of thickness, and Fig. 4b is a cross sectional view of the mold when cut by a perpendicular line including a bisector in the direction of length. Fig. 5 is a functional block diagram showing an injection molding machine equipped with a detecting means 33. Fig. 6 is a time chart showing the relationship between the detection temperature and injection of compressed gas.

The mold 42 having a cavity 31 has a charging means 32 for changing the cavity 31 with resin, a detecting means 33 for detecting the leading edge of the resin, a gas injection means 34 for injecting compressed gas, and a control means 35 for controlling the start and stop of the resin charging operation, and start and stop of the compressed gas injection

### (Mold)

The cavity 31 has an internal surface for forming the first surface portion 1 and second surface portions 12 constituting the outer surface of the resin molded article for the optical element. Referring to Fig. 4, the following describes the profile of the mold. Fig. 4a is a cross sectional view of the mold when cut by a perpendicular line including a bisector in the direction of thickness. Fig. 4b is a cross sectional view of the mold when cut by a perpendicular line including a bisector in the direction of length between the internal surfaces of the cavity 31 including a first region 311 for forming the first surface portion 11 and a second region 312 for forming the second surface portions 12. In Fig. 4, "A" indicates the distance between the cavity end on the resin charging side and fluid injection side, and the end of the first surface portion 11; and "B" denotes the distance between the other end and the end of the first surface portion 11.

Here, to achieve the surface precision used in the short-wave having a wavelength of 500 nm or less, the mirror surface forming section 315 is machined to a surface roughness Ra of 5 nm or less. This surface roughness Ra is preferably in the range of 2 to 3 nm.

Referring to Fig. 5, the mechanism surrounding the mold in an injection molding machine will be described. A gate 321, runner 322 and spool 323 are formed continuously on the cavity 31. A heater (not illustrated) is provided along the cavity 31, runner 322 and spool 323 (passage of the mold). This heater ensures that the molten resin having contacted the cavity 31 and passage of the mold will not be solidified by being cooled by thermal conduction and becoming less fluid. Instead of the heater, a temperature regulating water channel can be provided on the mold. Fig. 5 shows the internal surface of the cavity 31 as the outside shape of the fθ mirror (resin molded article) 10. Fig. 5 also shows the gate 321, runner 322 and spool 323 as an outside shape of the resin passing through them.

### (Charging means)

The charging means 32 is preferably mounted on the mold so that the resin will be charged from the direction of width of the fθ mirror 10 to the direction of length. Fig. 5 shows the side of the fθ mirror 10 in the direction of width that denotes the far-right portion of the cavity 31.

The nozzle 324 of the charging means 32 communicates with the spool 323. The charging means 32 has a screw (not illustrated) for extruding the molten resin from the nozzle 324. The screw allows the molten resin to be fed from the nozzle 324 to the spool 323, runner 322 and the gate 321 so that the cavity 31 is filled with resin. The distance traveled from the screw starting position or the time elapsed after start of screw traveling corresponds to the amount of the molten resin to be extruded (injection volume). The volumes of the mold passage from the spool 323 to the gate 321 and the cross sectional profile of the cavity 31 at each position in the direction of length are already known. This makes it possible to calculate the position of the leading edge of the molten resin charged into the cavity 31, based on the distance traveled from the screw starting position or the time elapsed after the start of screw traveling.

### (Detecting means(s))

The detecting means 33 is a temperature sensor for detecting the temperature on the internal surface of the cavity 31. One or more detecting meanss 33 are arranged on the internal surface of the cavity 31 having the same range as that of the second region 312 in the direction of length, including the second region 312 of the internal surface of the cavity 31 for forming the second surface portions 12. Here, the internal surface of the cavity 31 having the same range as that of the second region 312 in the direction of length refers to the internal surface of the cavity 31 provided in a circumferential shape in the same range as that of the second region 312 in the direction of length, and indicates the bottom surface 312 and double lateral wall surface 314, when the second region 312 is assumed as a ceiling surface. Fig. 5 indicates a detecting means 33 arranged on the bottom surface 313 opposed to the second region 312 (ceiling surface) on the side opposite the second region 312 on the gate side, with respect to the direction of length. The detecting means 33 is not restricted to a temperature sensor if it is a sensor capable of detecting the leading edge of the resin at the time of injection inside the cavity 31. For example, an ultrasonic sensor or magnetic sensor can be used.

The detecting means 33 can detect the leading edge of the resin having reached the second region 312 of the cavity 31. The control means 35 receives the detected temperature t1 from the detecting means 33 through the interface 38 as a detection signal. The control means 35 controls the charging means 32 and stops the resin charging operation, based on the detected temperature t1 from the detecting means 33. The control means 35 also controls the gas filling means 34 to start the compressed gas injection.

A detecting means 33 is provided on the internal surface of the cavity 31 having the same range as that of the second region 312 in the direction of length, including the second region 312. This arrangement ensures that the surface precision of the first surface portion 11 is not adversely affected by the detecting means 33. Further, the leading edge of the resin having reached the second region 312 is detected directly by the detecting means 33, and the resin charging operation is stopped in response to this detection signal. This structure minimizes an error in time up to the start of the compressed gas injection operation subsequent to arrival of the leading edge of the resin to the second region 312 and suspension of the resin charging operation. This ensures the hesitation mark HM to be formed on the second surface portions 12, and protects the surface precision of the first surface portion 11 against possible deterioration.

### (Gas injecting means)

The gas filling means 34 includes a tank (not illustrated) for storing the compressed gas, a solenoid valve 341, and an injection outlet 342 communicating with the cavity 31. The control means 35 controls the open/close operation of the solenoid valve 341. Any compressed gas can be used if it does not react or mix with the resin. For example, an inert gas can be used. When safety and economy are taken into account, nitrogen is preferably used because it is non-combustible and nontoxic, and does not require much cost. The injection outlet 342 is located on the bottom surface 313 in a region corresponding to the second region 312 of the internal surface of the cavity 31. To be more specific, the injection outlet 342 is provided on the bottom surface within the space between the positions corresponding to the end of the first surface and the end of the optical element.

### (Storage means)

The storage means 36 stores the predetermined reference temperature t0 to be compared with the detected temperature t1 from the detecting means 33. Fig. 6 shows the detected temperature t1 and the reference temperature t0.

### (Decision means)

The decision means 37 compares the detected temperature t1 with the reference temperature t0. If the detected temperature t1 has exceeded the reference temperature t0, the decision means 37 outputs the result of decision to the control means 35. When the leading edge of the molten resin has reached the position of the detecting means 33, the detected temperature t1 detected by the detecting means 33 is determined as the reference temperature t0.

### (Control means)

In response to the detected temperature t1 from the detecting means 33, the control means 35 allows the decision means 37 to compare the detected temperature with the reference temperature. When the decision means 37 has determined that the detected temperature t1 exceed the reference temperature t0, the control means controls the charging means 32 so that charging of the cavity 31 with resin will be suspended. Further, the control means 35 controls the gas filling means 34 to start injection of compressed gas into the charged resin. The control means 35 suspends the inspection of compressed gas after the elapse of a prescribed time from the start of injection of the compressed gas. Fig. 6 shows the operation of stopping the resin charging, and starting the injection of compressed gas, when the detected temperature t1 has exceeded the reference temperature t0.

When the compressed gas is injected into the charged resin, the molten resin portion that may be formed as a defect of unsightly appearance such as a hesitation mark will be handled as follows: Resin is pushed into a space having the same or greater length as the injection outlet 342 formed in the region corresponding to the second surface portions 12 located opposite the injection outlet 342 through the first surface portion 11. Accordingly, the hollow portion 14 is formed over a wider area with sufficient margin below the region corresponding to the first surface portion 11. The impact of the tensile stress due to the thermal shrinkage of resin is released by the formed hollow portion 14, with the result that warping of the first surface portion 11 can be reduced.

The hollow portion 14 is preferably formed over a wider range to cover the region corresponding to the second surface portions 12 because warping of the first surface portion 11 can be reduced with a high degree of reliability.

Since the compressed gas is injected before resin is cooled subsequent to suspension of resin charging operation, injection of the gas is preferably started almost simultaneously with suspension, or in the range of 1 to 5 seconds after charging with resin.

In response to the operation having been performed through the interface 38 by the operation means 41, the control means 35 adjusts a prescribed time so that the updated prescribed time is stored in the storage means 36. Adjustment of a prescribed time allows the position of the hesitation mark HM to be adjusted.

In response to the instruction from the operation means 41, the control means 35 stores the updated reference temperature t0 in the storage means 36. To adjust the time of suspending the resin charging operation and starting the compressed gas injection, one has only to adjust the reference temperature t0. The reference temperature t0 can be determined on an empirical basis by repeating the test of manufacturing the substrate of the fθ mirror 10 and by measuring and evaluating the produced fθ mirror 10. The reference temperature t0 is determined on a relative basis in conformity to the material of the substrate of the fθ mirror 10, the temperature of the heating cylinder and resin charging volume per unit time.

### (Material of resin molded article for optical element)

The material of the fθ mirror 10 will be described. The resin material constituting the substrate of the fθ mirror 10 is exemplified by polycarbonate, polyethylene terephthalate, polymethyl methacrylate, cyclo olefin polymer, and a resin made up of two or more of these substances.

### (Material of mirror surface section)

The following describes the material constituting the mirror surface section 13 of the fθ mirror 10. The material constituting the mirror surface section 13 is exemplified by silicon monoxide, silicon dioxide and alumina. The film can be formed by a commonly known film forming method such as a vacuum vapor deposition, sputtering or ion plating method.

### (Manufacturing method)

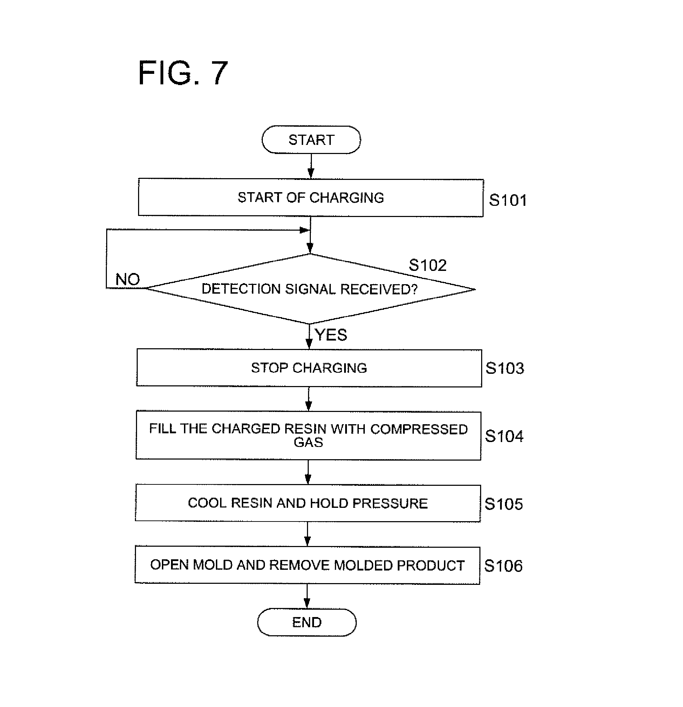

Referring to Fig. 7, the following describes how to manufacture the fθ mirror 10. Fig. 7 is a flow chart showing the step of manufacturing the fθ mirror 10.

Before the mold cavity 31 is filled with resin, the cylinder (not illustrated) of the charging means 32 is preset to reach a prescribed molten temperature. Further, the control means 35 keeps the solenoid valve 341 closed. The control means 35 controls the charging means 32 so that the screw rotates. Then the resin is injected from the nozzle 324 and is fed through the spool 323, runner 322 and gate 321 so that the resin is charged into the cavity 31 (Step S101).

The cavity 31 is further filled with resin. The leading edge of the molten resin having reached the second surface portions 12 is detected by the detecting means 33. When the decision means 37 has determined that the detected temperature t1 detected by the detecting means 33 exceeds the reference temperature t0 (Step S102: Y), the control means 35 controls the charging means 32 and suspends the operation of the cavity 31 being filled with the resin (Step S 103). The control means 35 controls the gas filling means 34 to open the solenoid valve 341. This procedure ensures that the compressed gas inside the tank (not illustrated) is jetted out from the injection outlet 342 into the cavity 31.

The injection outlet 342 is located on the bottom surface 313 opposed to the second region 312 and the injection outlet 342 is opened in the direction of length. This arrangement allows compressed gas to be injected into the charged resin in the direction of length (Step S104). This procedure forms a hollow portion to be formed to extend in the direction of length. Further, when the leading edge of the molten resin has reached the second surface portions 12, the resin charging operation is suspended and the resin is filled with compressed gas. This procedure allows a hesitation mark to be formed on the second surface portions 12, but not on the first surface portion 11. This protects the surface precision of the first surface portion 11 against possible deterioration.

The molten resin is solidified and cooled by the thermal conduction of a mold. While the molten resin is solidified and cooled, the hollow portion 14 is kept at a prescribed pressure (Step S105). If the pressure is maintained, the first surface portion 11 is pressed against the first region 311, with the result that transferability on the first surface portion 11 is improved. The mirror surface section 13 is formed in the first surface portion 11 in the process from the step of injecting the compressed gas (Step S 104) to the holding pressure step (Step S 105). This is followed by the step of removing the compressed gas from the hollow portion 14 and opening the mold to take out the fθ mirror (resin molded article) 10 (Step S106).

In the aforementioned Step 102, the control means 35 receives the detected temperature t1 as a detection signal from the detecting means 33. When the decision means 37 has determined that the detected temperature t1 exceeds the reference temperature, the resin charging operation is suspended and the injection of the compressed gas is started. As will be apparent from the above, the number of the detecting means 33 mounted on the bottom surface 313 (including the lateral wall surface 314) opposed to the second region 312 is one. A plurality of detecting means 33 can be mounted on the bottom surface 313 opposed to the second region 312.

When a plurality of detecting means 33 is mounted, suspension of the resin charging operation and start of the compressed gas filling are carried out as follows. The control means 35 controls the charging means 32 and gas filling means 34 when the detected temperature t1 detected by a particular detecting means 33 has exceeded the reference temperature t0, wherein the ordinal number of this particular detecting means 33 is preset, and is stored in the storage means 36. When the detected temperature t1 detected by a prescribed detecting means 33 has exceeded the reference temperature t0, the control means 35 controls the charging means 32 to stop resin charging operation, and controls the gas filling means 34 to adjust the start of injecting the compressed gas. When a plurality of gas filling means 34 are mounted, it is possible to improve the accuracy in determining the time for suspending the resin charging operation and starting injection of the compressed gas, and ensures a hesitation mark HM to be formed on the second surface portions 12.

In the first embodiment, a detecting means 33 is provided on the internal surface of the cavity 31 having the same range as that of the second region 312 in the direction of length, including the second region 312. When the temperature detected by the detecting means 33 has exceeded the reference temperature, the control means 35 controls the charging means 32 and gas filling means 34.

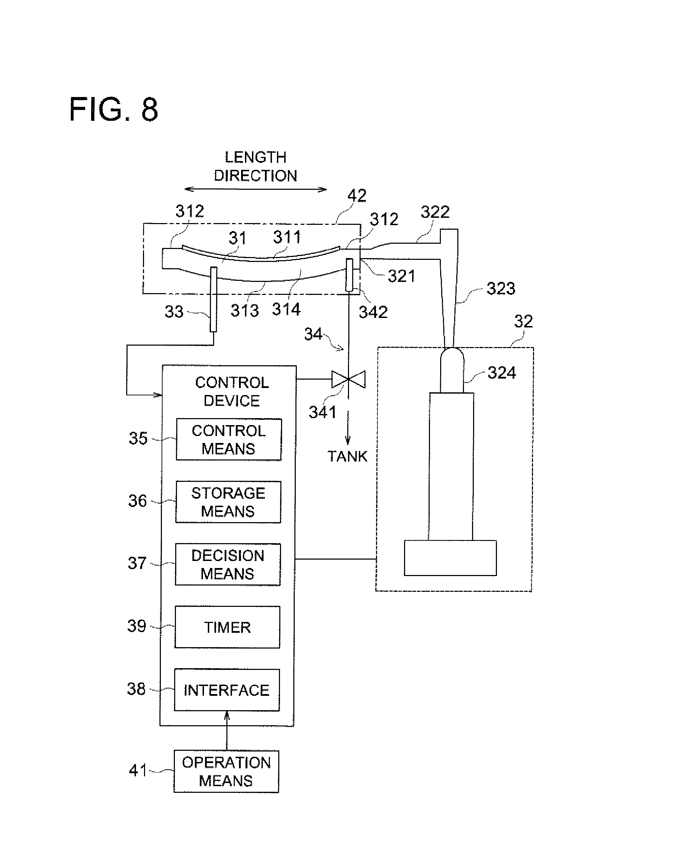

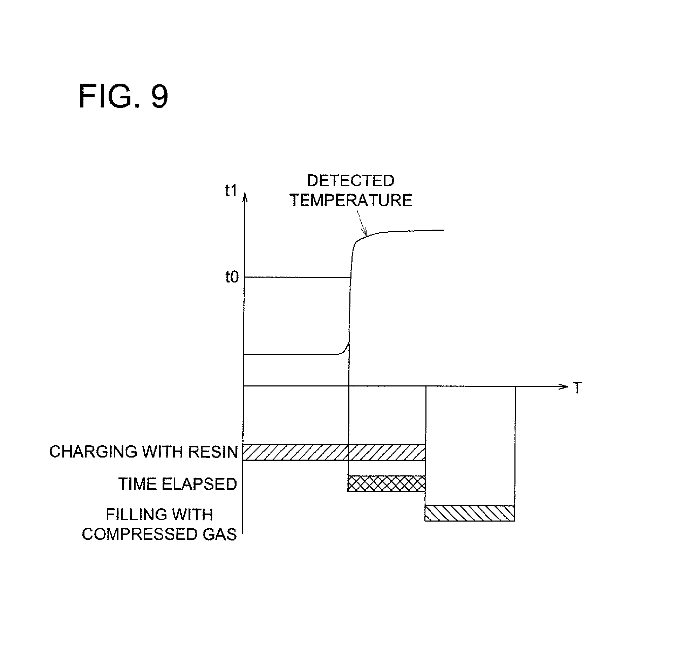

The following describes the manufacturing device related to an example of the variation of the first embodiment with reference to Figs. 8 and 9. Fig. 8 is a functional block diagram showing the injection molding machine equipped with a detecting means 33 and a timer 39. Fig. 9 is a time chart showing the relationship between the detection temperature and the start of injecting the compressed gas. Since a timer 39 is provided, the detecting means 33 can be installed in the first region 311.

When the decision means 37 has determined that the detected temperature t1 detected by the detecting means 33 exceeds the reference temperature t0, the control means 35 allows the timer 39 to count the time elapsed from when the detected temperature t1 has exceeded the reference temperature t0. When the decision means 37 has determined that the elapsed time has exceeded a prescribed time, the control means 35 controls the charging means 32 to stop the resin charging operation. The control means 35 controls the gas filling means 34 to start the injection of the compressed gas, and to suspend gas injection after the lapse of a prescribed time from the start of compressed gas injection. Fig. 9 shows the operation of countering the time elapsed when the detected temperature t1 has exceeded the reference temperature t0, the operation of suspending the resin charging step when the time elapsed has exceeded the preset time, and the operation of starting the injection of compressed gas.

One or more detecting means 33 are arranged on the internal surface of the cavity 31 having the same range as that of the first region 311 in the direction oflength, without including the first region 311 for forming the first surface portion 11. Fig. 8 indicates a detecting means 33 arranged on the bottom surface 313 opposed to the first region 311 (ceiling surface). Here, the internal surface of the cavity 31 having the same range as that of the first region 311 in the direction of length refers to the bottom surface 313 and double lateral wall surface 314 when first region 311 is assumed as a ceiling surface. Since the detecting means 33 is arranged on the bottom surface 313, there is no factor that may cause deterioration in the surface precision of the first surface portion 11.

When the leading edge of the molten resin is assumed to have reached the second region 312 from the first region 311, the control means 35 suspends the resin charging operation, and initiates compressed gas injection. This procedure allows a hesitation mark HM to be formed on the second surface portions 12.

Also for example, due to some restrictions in the space for installing a detecting means 33 or the profile of the fθ mirror 10 (resin molded article), a detecting means 33 may not be provided on the internal surface of the cavity 31 having the same range as that of the second region 312 in the direction of length, including the second region 312. In this case, the detecting means 33 can be installed on the bottom surface 313 or lateral wall surface 314 as an internal surface of the cavity 31 having the same range as the first region 311 in the direction of length. This arrangement enhances the degree of freedom in the installation of the detecting means 33.

The above-mentioned preset time is determined by a test as follows. For example, a step is taken to measure the time from the moment the decision means 37 has determined that the detected temperature t1 detected by the detecting means 33 exceeds the reference temperature t0, to the moment when the leading edge of resin reaches the second range. This measurement is repeated a plurality of prescribed times. Then based on this actual measurement, the movement of the leading edge of resin (spread of resin inside the cavity 31 or movement in the direction of length) is calculated by an approximation method, whereby the above-mentioned preset time is obtained. The control means 35 ensures that the preset time having been obtained is stored in the storage means 36. Further,in response to the operation on the operation means 41, the control means 35 adjusts the preset time and stores it in the storage means 36. Thus, this procedure minimizes the error between the preset time having been obtained, and the actual time before the leading edge of resin reaches the second region 312.

It is also possible to arrange such a configuration that a plurality of detecting means 33 are installed, and the traveling speed of the leading edge of resin in the direction of length can be obtained, based on detected temperatures t1 from a plurality of detecting means 33. In this case, the preset time is corrected in conformity to the traveling speed having been obtained, and the updated preset time is stored in the storage means 36. The decision means 37 makes a comparison between the time elapsed from the moment the decision means 37 has determined that the detected temperature t1 detected by the detecting means 33 exceeds the reference temperature t0, and the above-mentioned updated preset time (predicted time for the leading edge of resin to reach the second region). The control means 35 controls the charging means 32 and gas filling means 34 when the decision means 37 has determined that the above-mentioned elapsed time exceeds the updated preset time.

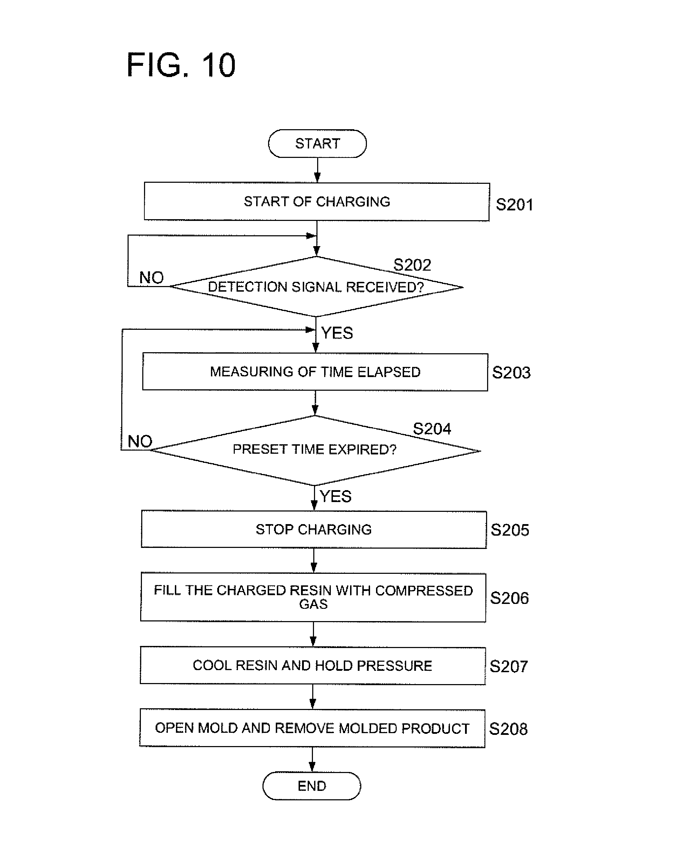

Referring to Fig. 10, the following describes the method for manufacturing the substrate of the fθ mirror 10 as a variation of the first embodiment. Fig. 10 is a flow chart showing the step of manufacturing the fθ mirror 10.

The control means 35 controls the charging means 32 so that the screw rotates. Then the resin is injected from the nozzle 324 and is fed through the spool 323, runner 322 and gate 321 so that the resin is charged into the cavity 31 (Step S201).

Further, the cavity 31 is charged with molten resin. The detecting means 33 detects the leading edge of the molten resin having reached the first surface portion 11. When the decision means 37 has determined that the detected temperature t1 detected by the detecting means 33 exceeds the reference temperature t0 (Step S202: Y), the control means 35 allows the timer 39 to measure the time elapsed after this decision (Step S203). When the decision means 37 has determined that the measured time exceeds the preset time (Step S204: Y), the control means 35 controls the charging means 32 to suspend the operation of charging the cavity 31 with resin (Step S205). Then the control means 35 controls the gas filling means 34 to open the solenoid valve 341. Then the compressed gas in the tank (not illustrated) is jetted into the cavity 31 from the injection outlet 342. At this time, the leading edge of the molten resin has already reached the second surface portions 12.

The injection output 342 is arranged on the bottom surface 313 opposed to the second region 312 and the injection output 342 opens in the direction of length. This arrangement allows the compressed gas to be injected into the charged resin in the direction of length (Step S206), whereby a hollow portion 14 extending in the direction of length in the resin is formed. When the above-mentioned elapsed time having been measured is determined to have exceeded the preset time (when the leading edge of the molten resin has reached the second surface portions 12), the control means 35 suspends the resin charging operation and allows the compressed gas to be injected into the resin, whereby a hesitation mark is formed on the second surface portions 12.

The molten resin is solidified and cooled by the thermal conduction with the mold. The hollow portion 14 is held at a prescribed pressure (Step S207) until solidification and cooling terminate. The pressure holding step allows the first surface portion 11 to be pressed against the first region 311. This enhances the transferability of the first surface portion 11. This is followed by the step of removing the compressed gas from the hollow portion 14. The mold is opened and the fθ mirror (resin molded article) 10 is taken out (Step S208).

The injection molding machine as a variation of the first embodiment is equipped with a detecting means 33 and a timer 339. When the decision means 37 has determined that the detected temperature t1 detected by the detecting means 33 exceeds the reference temperature t0, the timer 39 is allowed to measure the time elapsed after this decision. The control means 35 controls the charging means 32 and gas filling means 34 in conformity to the result of the measurement.

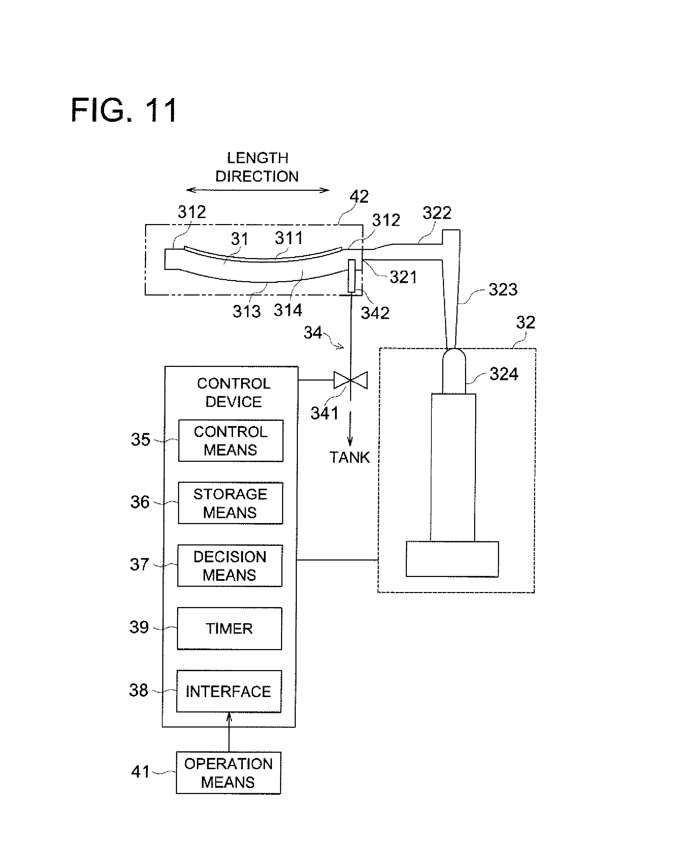

The following describes the manufacturing method as a variation of the first embodiment with reference to Fig. 11. Fig. 11 is a functional block diagram showing the injection molding machine equipped with a timer 39. In response to the elapsed time measured by the timer 39, the control means 35 controls the charging means 32 to suspend the resin charging operation, and the gas filling means 34 to start injection of compressed gas.

In an injection molding machine as a variation of the present embodiment, when the time elapsed from the start of the resin charging operation has exceeded the preset time, the control means 35 controls the charging means 32 and gas filling means 34. This procedure allows a hesitation mark HM to be formed on the second surface portions 12.

The resin charging operation can be started when the screw (not illustrated) of the charging means 32 has started, or when the control means 35 has ordered the charging means 32 to start the resin charging operation. The timer 39 counts the elapsed time. The decision means 37 determines whether or not the elapsed time having been measured has exceeded the preset time. In response to the information from the decision means 37 that the elapsed time has exceeded the preset time, the control means 35 controls the charging means 32 and gas filling means 34. This procedure does not require use of a detecting means 33 such as a temperature sensor, and contributes to cost reductions.

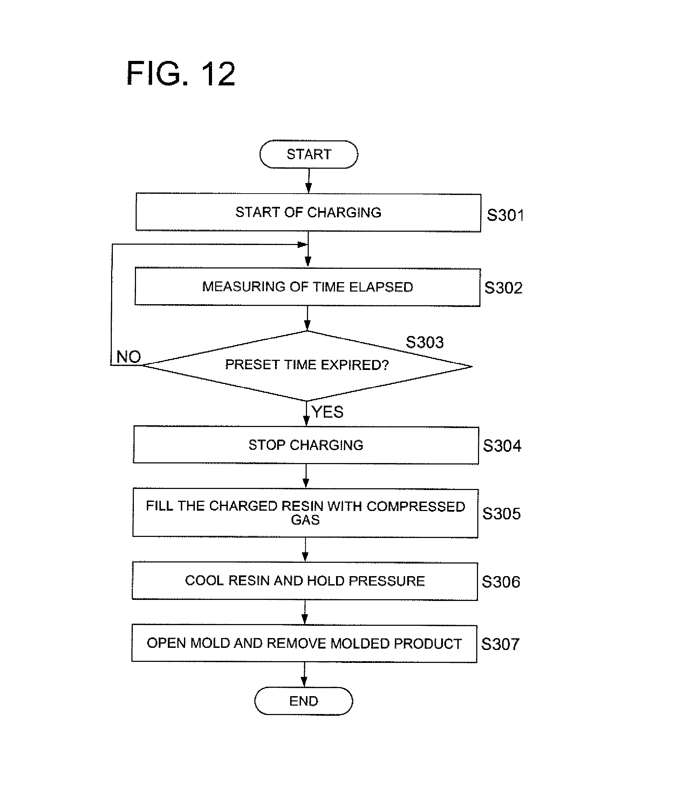

Referring to Fig. 12, the following describes the method of manufacturing the substrate of the fθ mirror 10 as another variation. Fig. 12 is a flow chart showing a step of manufacturing the substrate of the fθ mirror 10.

The control means 35 controls the charging means 32 so that the screw rotates. Then the resin is injected from the nozzle 324 and is fed through the spool 323, runner 322 and gate 321 so that the resin is charged into the cavity 31 (Step S301).

The timer 39 counts the time elapsed after the start of the resin charging operation (Step S302). The cavity 31 is further charged with the molten resin. The decision means 37 determines whether or not the elapsed time having been measured has exceeded the preset time. When the decision means 37 has determined that the elapsed time having been measured exceeds the preset time (Step S303: Y), the control means 35 controls the charging means 32 to suspend the operation of charging the cavity 31 with resin (Step S304). Then the control means 35 controls the gas filling means 34 to open the solenoid valve 341. Then the compressed gas in the tank (not illustrated) is jetted into the cavity 31 from the injection outlet 342. At this time, the leading edge of the molten resin has already reached the second surface portions 12.

The injection output 342 is arranged on the bottom surface 313 opposed to the second region 312 and the injection output 342 opens in the direction of length. This arrangement allows the compressed gas to be injected into the charged resin in the direction of length (Step S305), whereby a hollow portion 14 extending in the direction of length in the resin is formed. When the elapsed time having been measured is determined to have exceeded the preset time by the decision means 37 (when the leading edge of the molten resin has reached the second surface portions 12), the control means 35 suspends the resin charging operation and allows the compressed gas to be injected into the resin, whereby a hesitation mark is formed on the second surface portions 12.

The molten resin is solidified and cooled by the thermal conduction with the mold. The hollow portion 14 is held at a prescribed pressure (Step S306) until solidification and cooling terminate. The pressure holding step allows the first surface portion 11 to be pressed against the first region 311. This enhances the transferability of the first surface portion 11. This is followed by the step of removing the compressed gas from the hollow portion 14. The mold is opened and the fθ mirror (resin molded article) 10 is taken out (Step S307).

### (Embodiment 2)

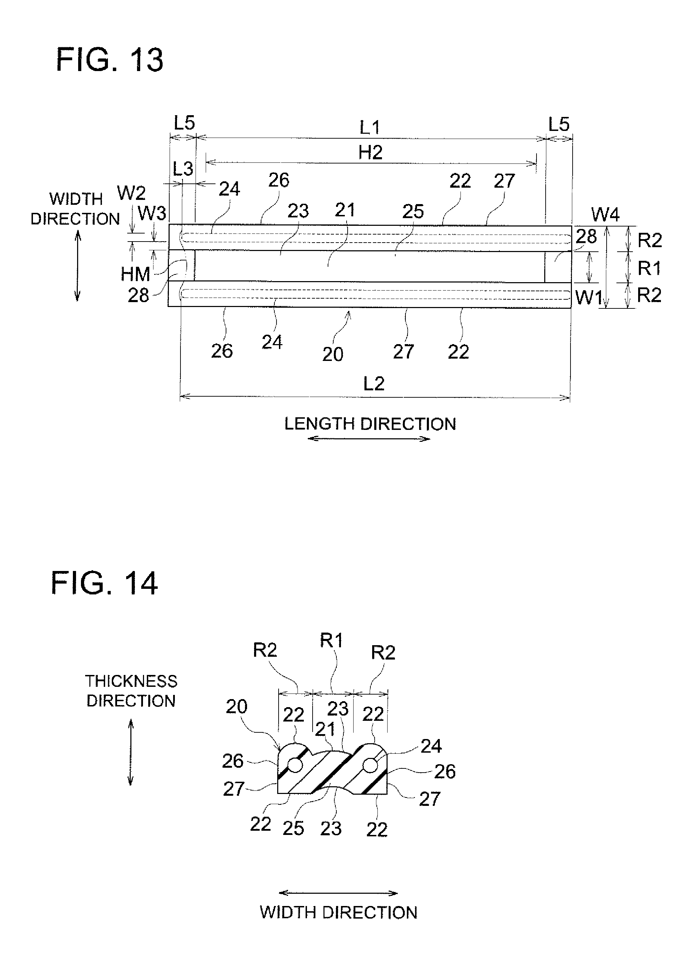

Referring to Figs. 13 and 14, the following describes the resin molded article for the optical element in a second embodiment of the present invention. Fig. 13 is a plan view showing the resin molded article for the optical element. Fig. 14 is a cross sectional view showing the resin molded article for the optical element. In the description of the resin molded article for the optical element in the first embodiment, the fθ mirror 10 has been used as a representative component. An fθ lens 20 will be used as a representative component to describe the resin molded article for the optical element in the second embodiment.

Similarly to the case of the fθ mirror 10, the fθ lens 20 is installed on the laser beam scanning optical device. While the fθ mirror 10 has a mirror surface section 13 for reflecting the laser beam, the fθ lens 20 has an optical surface section 23. The fθ lens 20 having an optical surface section 23 has the same function as the fθ mirror 10. The speed is converted so that the laser beam deflected at a constant angular speed by the polygon mirror 3 will have a constant linear speed on the scanned surface (photoreceptor drum 7). This laser beam pertaining to a semiconductor laser of gallium nitride has an oscillation wavelength of 408 mm.

The fθ lens 20 is formed in a long tabular shape, and has a prescribed range H2 in the direction of length. The fθ lens 20 includes a first surface section 21 to be provided with an optical surface section 23 for allowing passage of the optical beam received inside the a prescribed range H2; a second surface section 22 arranged around the first surface section 21; and a hollow portion 24. The first surface section 21 is provided on each of the upper and lower surface sides in the sheet of paper in Fig. 4. The first surface section 21 on the upper surface side forms a convex surface having a prescribed curved surface in the direction of width. The first surface section 21 on the lower surface side formes a concave surface having a prescribed curved surface in the direction of width.

In the width in the direction of length, a prescribed range is equal to or smaller than the region of the optical surface section 23, and the region of the optical surface section 23 is equal to or smaller than the region of the first surface section 21. Fig. 13 shows the region of the optical surface section 23 and the first surface section 21 which are matched with each other in the width in the direction of length.

In Fig. 13, R1 indicates the range of the first surface section 21 in the direction of width. R2 denotes the range of the second surface section 22 in the direction of width.

The fθ lens 20 includes a long tabular substrate, an optical surface section 23 located on the surfaces of the upper and lower surface sides of the substrate; and a hollow portion 24 inside the substrate so as to run in the direction of length, wherein the size of the hollow portion 24 in the direction of length is greater than the length of the optical surface section 23 in the direction of length, and both ends of the hollow portion 14 are formed outside both ends of the optical surface section 23 in the direction of length. This structure ensures that the tensile stress caused by shrinkage resulting from resin hardening is released into the hollow portion 24 having been formed. Thus, warping caused by shrinkage of resin at the time of resin hardening is reduced over the entire optical surface section 23, and the surface precision is enhanced.

In the resin molded article of the present embodiment, assume that the length of the optical surface section 23 in the direction of length is L1, the length in the direction of width is W1, the length of the hollow portion 14 in the direction of length is L2, the length in the direction of width is W2, the length of the substrate in the direction of thickness is W4, and the distance from the end of the optical surface section 23 to the end of the substrate with respect to one side in the direction of length is L5. It is preferred to design the structure wherein the distance L3 from the end of the optical surface section 23 to the end of the hollow portion 24 is 0 = L3 < L5 with respect to one side in the direction of length. The distance W3 from the end of the optical surface section 23 to the end of the hollow portion 24 is 0 = W3 < W2 / 2 with respect to one side in the direction of width.

The preferred relationship between the length W1 of the optical surface section 23 in the direction of width and the length W2 of the hollow portion 24 is 0.01 = W2 / W1 = 1.

The fθ lens 20 includes: a first molded section 25 containing a first surface section 21 as the surface thereof; and a second molded section 26 containing a second surface section 22 as the surface thereof and enclosing the first molded section 25 in the form of a frame. The second molded section 26 has a rib 27 and end frame 28. The rib 27 is thicker than the first molded section 25 and is formed on each side of the first molded section 25 in the direction of width perpendicular to the direction of length so as to run along the direction of length. Further, the end frame 28 is formed on each side of the first molded section 25, and has approximately the same thickness as the first molded section 25 in such a way as to extend from the first molded section 25. Thus, the second surface section 22 provided on the periphery of the first surface section 21 includes the surfaces (upper and lower surfaces) of the rib 27 and the surfaces (upper and lower surfaces) of the end frame 28 arranged on each side of the first surface section 21 in the direction of length.

The rib 27 is provided along the first surface section 21. This structure enhances the overall rigidity of the fθ lens 20. The rib 27 is provided along the first surface section 21. This allows the shape of the rib to be determined, without being restricted by the profile of the first molded section 25. This improves the degree of freedom in the selection of the profile of the rib 27. Thus, the hollow portion 24 can be designed in the profile that ensures easier formation, and the rib 27 can be formed, for example, to have a prescribed thickness and a prescribed width in the direction of width. Further, the rib 27 can be formed in a straight line and the hollow portion 24 can be formed in a straight line in the direction of length. Accordingly, easy formation of the hollow portion 24 is ensured by this structure.

Since a hollow portion 24 is arranged inside the rib 27, warping of the rib 27 can be reduced. This will lead to the reduction in the warping of the first molded section 25, and will therefore protect against deterioration in the surface precision of the optical surface section 23 located on the first surface section 21 of the first molded section 25.

The hesitation mark HM is formed on the surface of the rib 27 as the second surface section 22, or the surface of the end frame 28. In the second embodiment, the hesitation mark HM is formed on the second surface section 22. This prevents unsightly appearance from being formed on the first surface section 21 to be provided with the optical surface section 23.

The following describes the injection molding machine for manufacturing the substrate of the fθ lens 20. The basic structure of this injection molding machine is the same as the injection molding machine for manufacturing the fθ mirror 10, and will not be described to avoid duplication. The following describes the differences in structure.

### (Detecting means)

One or more detecting means 33 are preferably arranged on the internal surface of the cavity 31 forming the end frame 28. If the detecting means 33 is installed in this position, the leading edge of the molten resin spreading beyond the first surface section 21 can be directly detected and the hesitation mark HM can be formed correctly on the second surface section 22 (surface of the end frame 28). Further, when a plurality of detecting means 33 are installed in this position, it is possible to enhance the reliability of the hesitation mark HM being formed on the second surface section 22. The detecting means 33 can be arranged on the internal surface (the internal surface of the cavity 31 for forming the rib 27) of the cavity 31 having the same range as that of the internal surface of the cavity 31 for forming the end frame 28.

Further, the detecting means 33 can be arranged on the internal surface (the internal surface of the cavity 31 for forming the rib 27) of the cavity 31 having the same range as that of the internal surface of the cavity 31 for forming the first surface section 21. In this case, when the decision means 37 has determined that the detected temperature t1 detected by the detecting means 33 exceeds the reference temperature t0, the control means 35 allows the timer 39 to measure the time elapsed after this decision. In response to the information from the decision means 37 that the elapsed time has exceeded the preset time, the control means 35 controls the charging means 32 and gas filling means 34.

### (Material of fθ lens)

The material of the fθ lens will be described. The resin material constituting the substrate of the fθ lens 20 is exemplified by polycarbonate, polyethylene terephthalate, polymethyl methacrylate, cyclo olefin polymer, and a resin made up of two or more of these substances. Of these, polycarbonate and cyclo olefin polymer are preferably used.

### (Manufacturing method)

The aforementioned manufacturing device and material are used to manufacture the substrate of the fθ lens 20. The method for manufacturing the fθ lens 20 is basically the same as that in the first embodiment, and will not be described.

The embodiments of the present invention have been described with reference to the resin molded article for the optical element. It is to be expressly understood, however, that the present invention is not restricted to the resin molded article for the optical element. For example, it goes without saying that the present invention is applicable, for example, to the resin molded article wherein a hollow portion is formed inside, the surface with a prescribed surface precision and the surface with a surface precision lower than a prescribed level are provided, and a hesitation mark formed on the surface with a surface precision lower than a prescribed level.

### EXAMPLE

The following describes the present invention with reference to the preferred Example. In the Example, the resin molded article to be manufactured is a substrate of fθ mirror 10. A substrate of fθ mirror 10 is also used in the Comparative Example.

fθ mirrors 10 were molded and manufactured using the following two patterns of molds wherein the aforementioned manufactured device and method were employed and the cavity was formed in a profile of Fig. 3.

### (Pattern 1)

A=B=5.0mm

Two fθ mirrors obtained from the aforementioned mold were evaluated. It has been verified that deterioration in the profile caused by a sink mark or others is reduced on the first surface sections in both cases. The produced fθ mirrors are characterized by a high degree of surface precision.

It has also been verified that, when the aforementioned mirror is applied to a scanning optical device using a laser beam having a wavelength of 408 nm, the spot can be sufficiently narrowed and high-definition image formation can be ensured.

### (Pattern 2)

In a Comparative Example, an fθ mirror was molded and manufactured in the similar manner, using a cavity type mold wherein the first surface section was matched with the end of the optical element. A molded portion of unsightly appearance caused by hesitation was observed on the first surface section of this product. It has been demonstrated that satisfactory image formation cannot be provided by the aforementioned scanning optical device.

### DESCRIPTION OF REFERENCE NUMERALS

HM. Hesitation mark
t1. Detected temperature
t0. Reference temperature
10. fθ mirror
11. First surface portion
12. Second surface portions
13. Mirror surface section
14. Hollow portion
20. fθ lens
21. First surface section
22. Second surface section
23. Optical surface section
24. Hollow portion
25. First molded section
26. Second molded section
27. Rib
28. End frame
31. Cavity
32. Charging means
33. Detecting means
34. Gas filling means
35. Control means
36. Storage means
37. Decision means
38. Interface
39. Timer
41. Operation means
42. Mold
311. First region
312. Second region
313. Bottom surface
314. Lateral wall surface
315. Mirror surface forming section
341. Solenoid valve
342. Injection output

## Claims

1. A resin molded article for an optical element comprising:
a first surface portion provided on a part of a surface of a substrate formed of resin; and a hollow portion formed by filling a substrate interior with a fluid from outside; wherein, assuming that a distance between a first end of the substrate and an end of the first surface portion close to the first end is "A", and a distance between a second end on an opposite side through the first surface portion, the second end being an end different from the first end of the substrate, and an end of the first surface portion close to the second end is "B", the following relationship is satisfied:
A>0
B>0
A=B.

2. The resin molded article for optical element described in claim 1, wherein a surface roughness Ra of an entire first surface portion satisfies Ra = 5 (nm).

3. The resin molded article for optical element described in claim 1, wherein a mirror portion is formed on the first surface portion.

4. A scanning optical device comprising:
a light source;
a deflection means for deflecting an outgoing light emitted from the light source;
a converging means wherein the light emitted from the light source enters and converges onto the deflection means; and
an image forming optical system for forming an image from the light deflected by the deflection means on a surface to be scanned;
wherein at least one of the optical elements constituting the image forming optical system has one surface portion on a part of a surface of a long substrate formed of resin, and a hollow portion formed by injecting a fluid into the substrate from outside; wherein assuming that a distance between a first end of the substrate and an end of the first surface portion close to the first end is "A", and a distance between a second end on an opposite side through the first surface portion, the second end being an end different from the first end of the substrate, and an end of the first surface portion close to the second end is "B", the following relationship is satisfied:
A>0
B>0
A=B.

5. The scanning optical device described in claim 4, wherein a surface roughness Ra of an entire first surface portion satisfies Ra = 5 (nm).

6. The scanning optical device described in claim 4 or 5, wherein the first surface portion is provided with a mirror surface section for reflecting the outgoing light.

7. The scanning optical device described in clam 6, wherein a surface roughness Ra of the mirror surface section satisfies Ra = 5 (nm).

8. A method for manufacturing a resin molded article for an optical element wherein, in a resin molded article for an optical element having a first surface portion on a part of a surface of a substrate formed of resin, and a hollow portion formed by injecting a fluid into the substrate from outside, assuming that a distance between a first end of the substrate and an end of the first surface portion close to the first end is "A", and a distance between a second end on an opposite side through the first surface portion, the second end being an end different from the first end of the substrate, and an end of the first surface portion close to the second end is "B", the following relationship is satisfied:
A>0
B>0
A= B,
wherein the method for manufacturing a resin molded article for an optical element comprising:
a step of preparing a first mold having a transfer surface for transferring the first surface portion; and a second mold provided opposed to the first mold to form a cavity by clamping the mold jointly with the first mold;
an injection step for injecting a molten resin from one of cavity ends into the cavity;
a detection step for detecting that a leading edge of the resin charged in the injection step is located at a prescribed position; and
a fluid injection step for controlling the charging with resin based on a detection in the detection step and forming a hollow portion inside the cavity by injecting a fluid into the cavity.

9. The method for manufacturing a resin molded article for an optical element described in claim 8, wherein a surface roughness Ra of an entire first surface portion satisfies Ra = 5 (nm).

10. The method for manufacturing a resin molded article for an optical element described in claim 8 or 9, further comprising a mirror surface section forming step for forming a mirror surface section on the first surface portion of the resin molded article obtained subsequent to the fluid injection step.

11. The method for manufacturing a resin molded article for an optical element described in any one ofclaims 8 to 10, wherein, in the fluid injection step, injection of fluid starts after a prescribed time has lapsed from suspension of charging with resin.

12. A device for manufacturing a resin molded article for an optical element wherein, in a resin molded article for the optical element comprising a first surface portion on part of a surface of a substrate formed of resin, and a hollow portion formed by injecting a fluid into the substrate from outside, assuming that a distance between a first end of the substrate and an end of the first surface portion close to the first end is "A", and a distance between a second end on an opposite side through the first surface portion, the second end being an end different from the first end of the substrate, and an end of the first surface portion close to the second end is "B", the following relationship is satisfied:
A>0
B>0
A=B;
the device for manufacturing a resin molded article further comprising:
a first mold having a transfer surface for transferring the first surface portion;
a second mold provided opposed to the first mold to form a cavity by clamping the mold jointly with the first mold;
a charging means for injecting a molten resin from one of cavity ends into the cavity;
a detection means for detecting that the resin charged into the cavity by the charging means is located at a prescribed position; and
a fluid injection means for controlling charging with resin by the detection means and injection of a fluid into the cavity by the fluid injection means.
